Europäisches Patentamt

European Patent Office

Office européen des brevets

(19)

(11) Numéro de publication: **0 075 500 B1**

(12) **FASCICULE DE BREVET EUROPEEN**

(45) Date de publication du fascicule du brevet:
08.05.85

(51) Int. Cl.⁴: **A 23 N 15/08,** A 23 N 7/02,
A 47 J 17/18

(21) Numéro de dépôt: 82401598.6

(22) Date de dépôt: 30.08.82

(54) **Machine permettant l'épluchage et le nettoyage de produits alimentaires en particulier de légumes tels que les oignons.**

(30) Priorité: 23.09.81 FR 8117924

(43) Date de publication de la demande:
30.03.83 Bulletin 83/13

(45) Mention de la délivrance du brevet:
08.05.85 Bulletin 85/19

(84) Etats contractants désignés:
AT BE CH DE GB IT LI LU NL SE

(56) Documents cités:
FR - A - 2 440 706
GB - A - 378 971
GB - A - 427 647

(73) Titulaire: **DITO-SAMA, 39 rue de Beauze,
F-23200 Aubusson Creuse (FR)**

(72) Inventeur: **Bos, Pierre Henri, rue Corot,
F-23200 Aubusson (FR)**
Inventeur: **Musseau, Joel, Passage Sarazin,
F-23200 Aubusson (FR)**
Inventeur: **Rochez, Claude, Farges, F-23200 Aubusson
(FR)**

(74) Mandataire: **Madeuf, René Louis et al, Cabinet
Madeuf 3, Avenue Bugeaud, F-75116 Paris (FR)**

## Description

On connaît déjà les machines pour éplucher et nettoyer les légumes, les fruits et autres produits alimentaires mais celles-ci n'ont pas donné satisfaction lorsqu'il s'agit d'éplucher et de nettoyer des oignons et aulx.

En effet, les machines existant sur le marché pour l'épluchage des légumes et qui doivent également éplucher les oignons sont généralement conçues suivant le principe d'un plateau tournant dans une chambre sensiblement cylindrique fixe, le travail étant obtenu par un brassage des produits dans la chambre qui amène successivement au contact de surfaces actives, c'est-à-dire de surfaces plus ou moins rugueuses, chaque élément de la charge constituée par les légumes de façon à nettoyer ceux-ci. Une évacuation permet d'éliminer les peaux et déchets au fur et à mesure de leur production soit par l'effort combiné de la rotation du plateau et de la vitesse de rotation des légumes, soit par ces mêmes efforts, plus une distribution d'eau se faisant sous une pression variable.

Ces machines peuvent être classées en trois groupes qui sont les suivants.

1) le premier groupe comprend des machines ayant un plateau et cylindre garnis d'abrasifs avec une évacuation latérale ou par-dessous. Ces machines donnent généralement d'excellents résultats pour l'épluchage des tubercules mais elles conviennent mal pour les oignons car, en effet, elles blessent assez profondément la chair et consomment une partie importante du produit. En outre, l'évacuation des peaux est difficile car celles-ci collent à la paroi du cylindre, d'où des problèmes de nettoyage et en conséquence d'hygiène. Enfin, cette disposition pose le problème de rechange de la partie active du cylindre en service après vente.

2) le deuxième groupe consiste à employer un plateau lisse et avoir ainsi un cylindre garni d'abrasif avec une évacuation latérale. Ces machines conviennent mal à l'épluchage des tubercules du fait d'une faible efficacité et elles sont donc généralement réservées à l'épluchage d'un produit tel que les oignons. Les résultats obtenus révèlent un mauvais renouvellement de la charge, donc un travail irrégulier, une mauvaise évacuation des peaux qui se collent sur le cylindre et en diminuent d'autant l'efficacité. Enfin, l'évacuation latérale pose aussi le problème d'un dispositif annexe de récupération qui augmente sensiblement l'encombrement de la machine et, de plus, est sujet à des pannes, d'où un mauvais travail avec une machine d'un prix de revient extrêmement élevé.

3) le troisième groupe est constitué par un système mixte à plateau garni d'abrasif ou de lames coupantes avec un cylindre lisse comportant une rampe de déflection, l'évacuation se faisant latéralement. Ces machines améliorent la qualité du travail mais elles présentent toujours cependant l'inconvénient d'un encombrement considérable et, en plus, il est absolument nécessaire de prévoir un système de récupération annexe hors du volume de la machine. Il y a donc lieu de considérer que ces machines ne peuvent être couramment employées car elles sont d'un entretien compliqué et d'un prix de revient élevé. Le brevet GB-A-427 647 montre une machine à éplucher les légumes qui comprend des pieds de supports, un conteneur cylindrique ayant un fond fixe dans lequel est ménagée une ouverture d'évacuation excentrée reliée à une buse, un arbre vertical traversant le fond fixe du conteneur en son centre et entraîné en rotation par des engrenages situés sous le fond fixe, un disque horizontal entraîné en rotation par l'arbre vertical et présentant un bossage sur sa face supérieure et des ailettes à bord inférieur rectiligne sur sa face inférieure, finalement, une porte latérale d'extraction s'ouvre devant une goulotte de déversement. Les ailettes disposées sous le disque rotatif coopèrent avec le fond horizontal du cylindre pour balayer les déchets vers la buse d'évacuation.

Cependant, cette machine ne permet pas de résoudre le problème posé par l'épluchage des oignons qui présente l'inconvénient de former »des boules d'épluchure« provoquant l'obturation rapide des parties d'évacuation des machines.

La présente invention remédie à ces invonvénients en créant une machine dans laquelle un récipient est supporté par des pieds réglables de façon à rendre la machine verticale sur son support, ce récipient contenant un filtre dont le fond est placé au-dessus du fond du récipient qui comporte un conduit d'évacuation, la tête du filtre supportant à sa partie supérieure un cylindre vertical qui contient à sa base un groupe moto-réducteur entraînant un arbre vertical central, le groupe moto-réducteur et son arbre vertical central étant recouverts par le fond d'une cuve de travail présentant une ouverture excentrée reliée à une buse débouchant au-dessus du filtre prémentionné, puis la machine comporte du fond de la cuve un disque horizontal entraîne en rotation par l'arbre central et présentant au moins un bossage excentré, ce disque étant revêtu sur sa partie supérieure d'une couche abrasive et comportant sur sa face inférieure du moins une ailette radiale, de plus, le cylindre dans lequel on introduit les produits à nettoyer est fermé par un couvercle étanche tandis que les produits sont extraits après nettoyage par une porte latérale placée devant une goulotte de déversement, finalement, le fond de la cuve de travail présente sur sa surface supérieure un sillon hélicoïdal ayant une section transversale en rapport avec le bord inférieur des ailettes placées sous le disque pour obtenir lors de la rotation de celui-ci un effet de pompage créant d'abord une dépression puis une compression facilitant l'évacuation du liquide de nettoyage et des déchets vers la buse d'évacuation.

Diverses autres caractéristiques de l'invention

ressortent d'ailleurs de la description détaillée qui suit.

Une forme de réalisation de l'objet de l'invention est représentée, à titre d'exemple, aux dessins annexés.

La fig. 1 est une élévation, partie en coupe, de la machine destinée à éplucher et nettoyer les légumes, et en particulier des oignons et et des aulx.

La fig. 2 est une coupe partielle, à plus grande échelle, montrant un détail de la fig. 1.

La fig. 3 est une coupe, à plus grande échelle, montrant une autre forme de réalisation d'un détail de la fig. 2.

La fig. 4 est un plan d'un des éléments de la machine.

La fig. 5 est une coupe-élévation montrant une légère modification de construction de la machine.

La fig. 6 montre en coupe partielle une légère variante d'un élément de la machine.

La fig. 7 est une élévation partielle d'une modification du bord vertical du plateau tournant.

La fig. 8 est une vue en perspective, à plus petite échelle, du fond de la cuve.

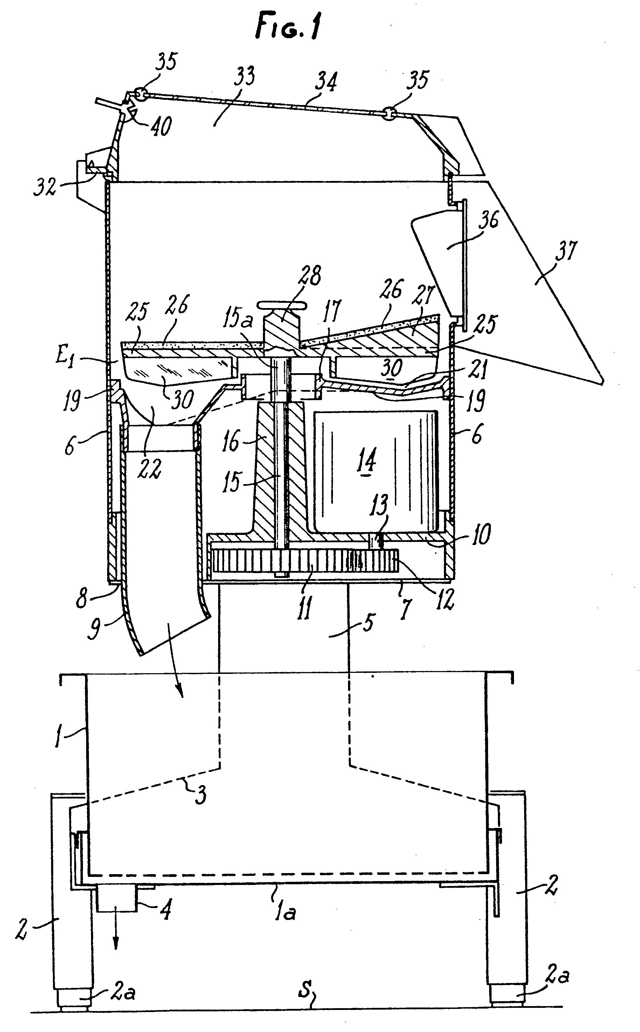

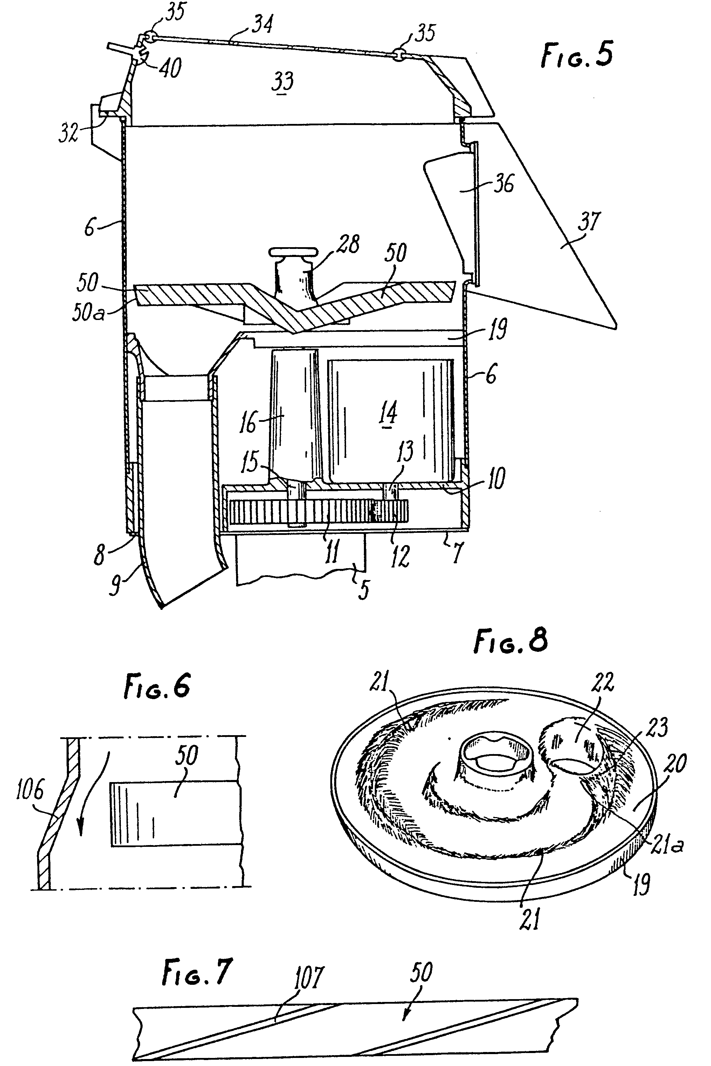

A la fig. 1, on voit un récipient 1 de forme sensiblement cylindrique, monté sur des pieds 2 pouvant être au nombre de trois ou quatre et qui portent le récipient 1. Cette partie inférieure 2a des pieds 2 est réglable de façon à aussurer une parfaite stabilité de la machine sur un support S pouvant être le sol ou une table. De plus, le dispositif de réglage placé en 2a des pieds 2 assure une horizontalité parfaite du fond 1a du récipient qui contient un filtre 3 de forme sensiblement circulaire à sa base. Le récipient 1 comporte, sur son fond 1, un raccord 4 d'évacuation de l'eau filtrée vers une sortie pouvant être, par exemple, l'égout. Le filtre 3 supporte, à sa partie supérieure, une tête 5 sur laquelle repose la machine proprement dite. Celle-ci est constituée par un cylindre 6 comportant un fond 7 très renforcé. Le fond 7 est percé d'une ouverture 8 à travers laquelle passe une buse 9 débouchant sur le filtre 3. Le fond 7 du cylindre 6 contient un carter 10 dans lequel sont placés des pignons 11, 12, le pignon 12 étant relié à l'arbre 13 d'un moteur 14 tandis que le pignon 11 est monté sur l'arbre 15 reposant dans un palier vertical 16 pour déboucher dans sa partie supérieure 15a dans une couronne 17 fixée au centre d'un plateau conformé 19. Ce plateau conformé 19, qui forme le fond de la cuve de travail de la machine, présente une surface extérieure 20 qui comporte un sillon en creux 21 partant pratiquement de zéro à partir d'une ouverture 22 placée au-dessus de la buse 9 pour aboutir au point 23 le plus creux juste à l'entrée de la buse 9 (voir fig. 8). Comme cela est visible à la fig. 1, la partie 15a supérieure de l'arbre 15, qui repose sur la partie supérieure du palier vertical 16, porte un disque 25 sensiblement plan sur sa face supérieure et qui comporte un revêtement abrasif 26. Cependant, le dessus du disque 25 présente au moins un bossage 27 radialement disposé à partir du moyeu 28 reliant rigidement le disque 25 à la partie supérieure 15a de l'arbre 15. Le diamètre du disque 25 est légèrement inférieur au diamètre intérieur du cylindre 1 dont les parois sont lisses en ménageant ainsi, comme le montre clairement la fig. 1, un espace circulaire $E_1$ dont le rôle sera expliqué plus loin. Le dessous du disque 25, qui est plan, présente des ailettes 30 ayant sensiblement une forme triangulaire épousant de très près la forme d'un sillon creux 21 tout en étant séparé de ce dernier d'une distance la plus faible possible, afin que ces ailettes constituent des organes d'aspiration pour, d'une part, faciliter l'expulsion des déchets et, d'autre part, créer une légère dépression favorisant l'évacuation non seulement des déchets prémentionnés mais également de l'eau. Comme cela est normal dans une machine à éplucher et nettoyer les légumes, on trouve à la partie supérieure, relié par une charnière 32, un couvercle 33 dont la face supérieure présente une glace 34 et un joint d'étanchéité 35 assurant de ce fait l'étanchéité entre le couvercle et le cylindre 6 de la machine. Il est également prévu à la partie avant de la machine, une porte 36 d'évacuation des légumes nettoyés ainsi qu'une goulotte de déversement 37. Comme le montre la fig. 1, un bec de projection 40 permet de pulvériser de l'eau à l'entrée de la machine parallèlement à la glace 34, ce jet nettoyant en permanence cette dernière afin que l'utilisateur puisse vérifier l'état de nettoyage des légumes placés à l'intérieur de la machine. La machine fonctionne de la façon suivante.

Lorsqu'après avoir soulevé le couvercle 33 on a placé à l'intérieur de la machine les légumes à nettoyer, par exemple des oignons, que l'on a refermé le couvercle 33, que l'on a vérifié que la porte 36 est bien fermée, on ouvre l'alimentation en eau du bec d'injection 40 puis, en mettant le moteur 4 sous tension, on entraîne en rotation le disque 25 par l'intermédiaire de l'arbre 13, des pignons 11 et 12 et de l'arbre 15. La rotation du disque 25 provoque, d'une part, le brassage de l'ensemble des légumes entre le disque et la paroi intérieure du cylindre 6 et en même temps, du fait du revêtement abrasif 26, un épluchage ou pelage lent des pellicules extérieures des légumes à nettoyer. La rotation rapide du disque 25 entraîne la création d'un vortex entre la partie inférieure des ailettes 30 et la partie supérieure du plateau conformé 19 qui aspire, d'une part, l'eau et, d'autre part, les pellicules retirées des légumes épluchés, ces pellicules pouvant aisément passer entre la face intérieure du cylindre 6 et le bord du disque 25 du fait de l'espace E1.

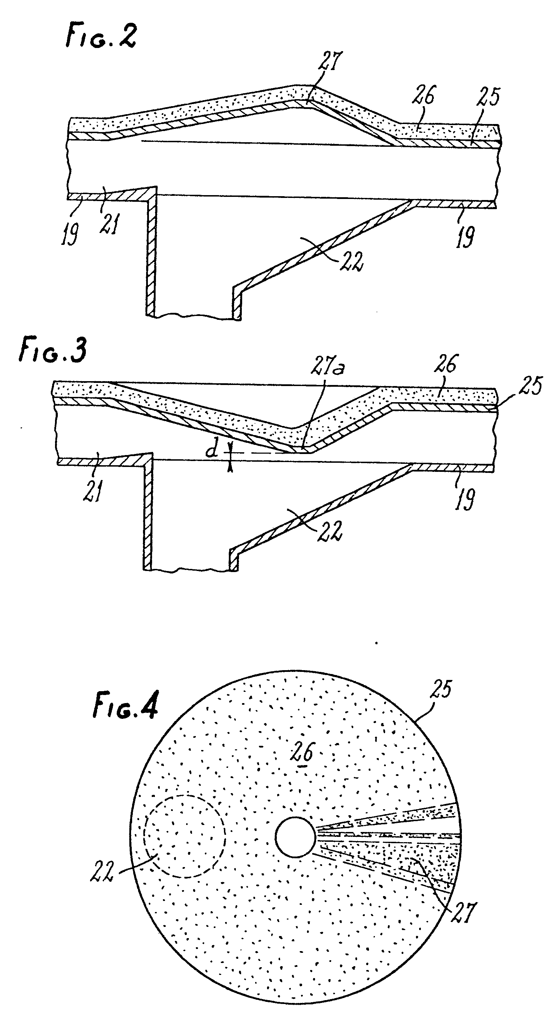

Ainsi, les déchets et l'eau sont précipités dans l'ouverture 22 puis dans la buse 9 et tombent sur le filtre 3 qui sépare les grosses impuretés de l'eau qui, en étant filtrée par le fond du filtre 3, est ensuite dirigée sur le raccord 4 vers un lieu d'évacuation. L'ouverture 22 dont la paroi 22a est fortement inclinée (voir fig. 2) permet d'absorber très rapidement les déchets et l'eau car, comme indiqué ci-dessus, il se produit un phénomène de pompage permettant une évacuation très rapide

de l'eau et des déchets.

Comme le montre la fig. 3, les bossages 27 qui sont en relief (voir fig. 1 et 2) peuvent être en creux de façon à former un élément complémentaire 27a complétant l'effet de pompage décrit ci-dessus à la seule condition que la distance d séparant le fond du bossage en creux 27a du sillon en creux 21 du plateau conformé 19 soit extrêmement faible.

A titre d'exemple non limitatif, on peut indiquer par exemple que le diamètre extérieur du plateau 25 est de 3 à 6% inférieur au diamètre intérieur du cylindre 6. Ainsi, du fait de la forme sensiblement hélicoïdale de la face supérieure du plateau conformé 19 et des ailettes 30 placées sous le disque 25, on peut affirmer obtenir une évacuation parfaite des déchets.

Afin de ne pas abîmer les légumes placés dans le cylindre 1, la paroi intérieure de celui-ci est lisse et tous les raccordements avec le couvercle 33 et la porte 36 sont réalisés en coins arrondis de façon à éviter tout choc brusque mais en permettant en même temps une parfaite étanchéité de la machine pour que celle-ci ne laisse pas passer l'eau nettoyant les légumes et évacuant les déchets.

Le revêtement abrasif 26 peut être plus ou moins fin suivant le travail demandé et, de plus, il peut y avoir plusieurs bossages en relief 27 ou en creux 27a disposés radialement suivant le travail que l'on veut obtenir et les légumes à traiter. Ceci est rendu possible en adaptant suivant les besoins un disque 25 approprié. Ces bossages prémentionnés sont à rampe progressive ce qui facilite le travail dans d'excellentes conditions. En effet, la machine décrite ci-dessus peut permettre l'épluchage des légumes, des oignons, des fruits, le grattage des coquillages (moules), le nettoyage d'abats (panses, tripes, pieds, têtes d'animaux), etc.

Dans certains cas, et comme le montre le fig. 5, le plateau 50 présente une forme hélicoïdale pour former avec le sillon 21 du plateau conformé 19 un organe de pompe centrifuge assurant une très rapide évacuation des déchets surtout lorsque ceux-ci sont visqueux et collants.

Il est également possible de prévoir un disque 50 dont la périphérie extérieure est légèrement inclinée comme le montre la fig. 5 et dont la distance minimum entre ce bord incliné 50a et la paroi intérieure du cylindre 6 est comprise entre 5 et 9 mm par exemple. Il peut également être prévu un disque à périphérie cylindrique et une paroi du cylindre 6 légèrement conformée en virole 106 (voir fig. 6). De même le bord extérieur du disque 50 peut comporter des rayures hélicoïdales 107 facilitant l'entraînement des déchets (voir fig. 7).

Comme cela est indiqué ci-dessus, le plateau conformé 19 présente un sillon en creux 21 de forme hélicoïdale mais on peut également avoir une forme en spirale.

Dans certains cas, et pour faciliter l'évacuation de l'eau et des déchets, le sillon en creux 21 présentant soit une forme hélicoïdale, soit une forme spirale, est prolongé par une gorge 21a comme cela est représenté à la fig. 8. L'invention n'est pas limitée à l'exemple de réalisation représenté et décrit en détail car diverses modifications peuvent y être apportées sans sortir de son cadre.

## Revendications

1. Machine permettant l'épluchage et le nettoyage de produits alimentaires, en particulier de légumes tels que des oignons dans laquelle un récipient (1) est supporté par des pieds réglables (2) de façon à rendre la machine verticale sur son support, ce récipient (1) contenant un filtre (3) dont le fond est placé au-dessus du fond (1a) du récipient (1) qui comporte un conduit d'évacuation (4), la tête (5) du filtre (3) supportant à sa partie supérieure un cylindre vertical (6) qui contient à sa base un groupe moto-réducteur (11, 12, 13, 14) entraînant un arbre vertical central (15), le groupe moto-réducteur et son arbre vertical central étant recouverts par le fond (19) d'une cuve de travail présentant une ouverture excentrée (22) reliée à une buse (9) débouchant au-dessus du filtre prémentionné (3), puis la machine comporte du fond de la cuve de travail un disque horizontal (25) entraîné en rotation par l'arbre central (15) et présentant au moins un bossage excentré (27, 27a), ce disque étant revêtu sur sa partie supérieure d'une couche abrasive (26) et comportant, sur sa face inférieure, au moins une ailette radiale (30), de plus, le cylindre (6) dans lequel sont placés les produits à nettoyer est fermé par un couvercle étanche tandis que ces produits sont extraits après nettoyage par une porte latérale (36) placée devant une goulotte de déversement (37), caractérisée en ce que le fond (19) de la cuve de travail présente sur sa surface supérieure un sillon hélicoïdal (21) ayant une section transversale en rapport avec le bord inférieur des ailettes (30) placées sous le disque (25) pour obtenir lors de la rotation de celui-ci un effet de pompage créant d'abord une dépression puis une compression facilitant l'évacuation du liquide de nettoyage et des déchets vers la buse d'évacuation (9).

2. Machine permettant l'épluchage et le nettoyage de produits alimentaires suivant la revendication 1, caractérisée en ce que le diamètre du disque (25) est légèrement inférieur au diamètre intérieur du cylindre (6).

3. Machine permettant l'épluchage et le nettoyage de produits alimentaires suivant l'une des revendications 1 et 2, caractérisée en ce que le diamètre extérieur du disque (25) est inférieur de 3 à 6% au diamètre intérieur du cylindre (6).

4. Machine permettant l'épluchage et le nettoyage de produits alimentaires suivant l'une des revendications 1 à 3, caractérisée en ce que les bossages (27, 27a) peuvent être en nombre quelconque et être par rapport à la face supérieure du disque (25) soit en relief soit en creux mais, dans ce cas, la distance séparant la partie inférieure de chaque bossage du fond de la cuve de travail (19) est extrêment faible afin d'obtenir l'effet de pompage créant d'abord une dépression puis une compression facilitant l'évacuation de l'eau et des déchets.

5. Machine permettant l'épluchage et le nettoyage de produits alimentaires suivant l'une des revendications 1 à 4, caractérisée en ce que le bord périphérique du plateau tournant (50) est légèrement tronconique.

6. Machine permettant l'épluchage et le nettoyage de produits alimentaires suivant l'une des revendications 1 à 5, caractérisé en ce que le bord périphérique extérieur du plateau tournant (50) comporte des rainures hélicoïdales (107) facilitant l'entraînement des déchets.

7. Machine permettant l'épluchage et le nettoyage de produits alimentaires suivant l'une des revendications 1 à 6, caractérisée en ce que le bord extérieur du plateau tournant (25, 50) situé près de la paroi intérieure du cylindre (6) affecte sensiblement la forme d'une virole facilitant l'aspiration des déchets et du liquide de nettoyage.

**Patentansprüche**

1. Maschine zum Schälen und Reinigen von Nahrungsmitteln, insbesondere von Gemüse, wie Zwiebeln und dergleichen, mit einem Behälter (1), der sich derart auf einstellbaren Füßen (2) abstützt, daß das Gerät auf seiner Unterlage senkrecht steht, wobei dieser Behälter (1) einen Filter (3) enthält, dessen Boden über dem Boden (1a) des Behälters (1) liegt, der eine Auslaßleitung (4) aufweist, und der Kopf (5) des Filters (3) auf seinem oberen Teil einen senkrechten Zylinder (6) trägt, welcher in seinem unteren Teil einen Motor mit Untersetzungsgetriebe (11, 12, 13, 14) aufweist, der eine senkrechte, mittig angeordnete Welle (15) antreibt, wobei der Motor mit Untersetzungsgetriebe und seine senkrechte, mittig angeordnete Welle von den Boden (19) einer Arbeitswanne überdeckt sind, die eine außermittig angeordnete Öffnung (22) aufweist, die mit einem Auslaßkrümmer (9) verbunden ist, der über dem erwähnten Filter (3) endet, wobei das Gerät ferner auf dem Boden der Arbeitswanne eine waagerecht angeordnete, von der mittig angeordneten Welle (15) zur Drehung angetriebene und mit wenigstens einer außenmittig angeordneten Erhebung (27, 27a) auf ihrer Oberfläche versehene Scheibe (25) aufweist, die auf ihrem oberen Teil mit einer schmirgelnden Schicht (26) versehen ist und auf ihrer Unterseite mindestens einen radialen Flügel (30) trägt, wobei der Zylinder (6), in welchem die zu reinigenden Produkte eingefüllt werden, mit einem wasserdichten Deckel abgeschlossen ist, während diese Produkte nach der Reinigung durch eine seitlich angeordnete Öffnung (36) abgegeben werden, die sich vor einem trichterförmigen Auslaß (37) befindet, dadurch gekennzeichnet, daß der Boden (19) der Arbeitswanne in seiner Oberfläche eine schraubenförmige Rille (21) aufweist, deren Querschnitt dem unteren Rand des unter der Scheibe (25) angeordneten Flügels (30) entspricht, um bei der Drehung der Scheibe einen Pumpeffekt zu erhalten, wobei zuerst eine Druckabsenkung und dann eine Druckerhöhung zwecks erleichtertem Abfluß von Wasser und Abfällen bis zum Auslaßkrümmer (9) erfolgen.

2. Maschine zum Schälen und Reinigen von Nahrungsmitteln nach Anspruch 1, dadurch gekennzeichnet, daß der Durchmesser der Scheibe (25) etwas geringer ist als der Innendurchmesser des Zylinders (6).

3. Maschine zum Schälen und Reinigen von Nahrungsmitteln nach Anspruch 1 oder 2, dadurch gekennzeichnet, daß der Außendurchmesser der Scheibe (25) 3—6% geringer ist als der Innendurchmesser des Zylinders (6).

4. Maschine zum Schälen und Reinigen von Nahrungsmitteln nach einem der Ansprüche 1 bis 3, dadurch gekennzeichnet, daß die Erhebungen (27, 27a) in beliebiger Anzahl vorhanden sein können, und zwar sei es im Relief oder als Rille in bezug auf die Oberseite der Scheibe (25), wobei in diesem Fall der den unteren Teil einer jeden Erhebung des Bodens (19) der Arbeitswanne trennende Abstand extrem gering ist, um den Pumpeffekt zu erhalten, wobei zuerst eine Druckabsenkung und dann eine Druckerhöhung zwecks erleichtertem Abfluß von Wasser und Abfällen erfolgen.

5. Maschine zum Schälen und Reinigen von Nahrungsmitteln nach einem der Ansprüche 1 bis 4, dadurch gekennzeichnet, daß der umlaufende Rand der sich drehenden Scheibe (50) leicht kegelstumpfförmig ist.

6. Maschine zum Schälen und Reinigen von Nahrungsmitteln nach einem der Ansprüche 1 bis 5, dadurch gekennzeichnet, daß der äußere Teil des Umfangsrandes der sich drehenden Scheibe (50) schraubenförmige Nuten (107) aufweist, welche das Weiterleiten der Abfälle erleichtern.

7. Maschine zum Schälen und Reinigen von Nahrungsmitteln nach einem der Ansprüche 1 bis 6, dadurch gekennzeichnet, daß der nahe bei der Innenwand des Zylinders (6) gelegene Außenrand der sich drehenden Scheibe (25, 50) etwa in Gestalt eines Ringes vorkommt, welcher das Ansaugen der Abfälle und der Waschflüssigkeit erleichtert.

**Claims**

1. Machine for peeling and cleaning foodstuffs, in particular vegetables like onions, in which a container (1) is supported by adjustable legs (2) so as to make the machine vertical on its support, this container (1) containing a filter (3) the bottom of which is placed above the bottom (1a) of the container (1) which comprises a discharge duct (4), the head (5) of the filter (3) supporting at its upper part a vertical cylinder (6) containing at its base a motor and reduction gear assembly (11, 12, 13, 14) driving a central vertical shaft (15), the motor and reduction assembly and its central vertical axis being covered by the bottom (19) of a working tank having an eccentric aperture (22) connected to a nozzle (9) opening above the aforementioned filter (3), then the machine comprises, at the bottom of the working tank, a horizontal disc (25) driven in rotation by the central shaft (15) and having at least one eccentric boss (27, 27a), this disc being coated on its upper portion with an abrasive layer (26) and comprising, on its lower face, at least one radial fin (30), moreover the cylinder (6) in which are placed the products to be cleaned is closed by a water-tigh cover while these products are extracted after having been cleaned through a lateral door (36) placed in front of a discharge chute (37), characterized in that the bottom (19) of the working tank has on its upper surface an helical groove (21) having a cross-section corresponding to the lower edge of the fins (30) placed under the disc (25) for obtaining, upon the rotation thereof, a pumping effect creating first a depression then a compression facilitating the discharge of the washing liquid and scraps to the discharge nozzle (9).

2. Machine for peeling and cleaning foodstuffs according to claim 1, characterized in that the diameter of the disc (25) is slightly smaller than the inner diameter of the cylinder (6).

3. Machine for peeling and cleaning foodstuffs according to one of claims 1 and 2, characterized in that the outer diameter of the disc (25) is smaller by 3 to 6% than the inner diameter of the cylinder (6).

4. Machine for peeling and cleaning foodstuffs according to one of claims 1 to 3, characterized in that the bosses (27, 27a) can be in any number and can be, with respect to the upper surface of the disc (25), either in relief or in recess, but, in this case, the distance separating the lower part of each boss from the bottom of the working tank (19) is extremely small so as to obtain the pumping effect creating first a depression then a compression facilitating the discharge of the water and scraps.

5. Machine for peeling and cleaning foodstuffs according to one of claims 1 to 4, characterized in that the peripheral edge of the rotating plate (50) is slightly frustoconical.

6. Machine for peeling and cleaning foodstuffs according to one of claims 1 to 5, characterized in that the outer peripheral edge of the rotating plate (50) comprises helical grooves (107) facilitating the evacuation of the scraps.

7. Machine for peeling and cleaning foodstuffs according to one of claims 1 to 6, characterized in that the outer edge of the rotating plate (25, 50) placed near the inner wall of the cylinder (6) has substantially the shape of a ferrule facilitating the suction of the scraps and washing liquid.

# Fig. 1

**Fig. 2**

**Fig. 3**

**Fig. 4**

9

**Fig. 5**

**Fig. 6**

**Fig. 8**

**Fig. 7**